Europäisches Patentamt

European Patent Office

Office européen des brevets

(19)

(11) EP 1 429 408 A1

(12) EUROPEAN PATENT APPLICATION
published in accordance with Art. 158(3) EPC

(43) Date of publication:
16.06.2004 Bulletin 2004/25

(51) Int Cl.⁷: H01M 8/02, H01M 8/10

(21) Application number: 03712819.6

(22) Date of filing: 20.03.2003

(86) International application number:
PCT/JP2003/003479

(87) International publication number:
WO 2003/081707 (02.10.2003 Gazette 2003/40)

(84) Designated Contracting States:
AT BE BG CH CY CZ DE DK EE ES FI FR GB GR
HU IE IT LI LU MC NL PT RO SE SI SK TR

(30) Priority: 25.03.2002 JP 2002084375
06.08.2002 JP 2002228319

(71) Applicant: MATSUSHITA ELECTRIC INDUSTRIAL
CO., LTD.
Kadoma-shi, Osaka 571-8501 (JP)

(72) Inventors:
• KOSAKO, Shinya
  Kobe-shi, Hyogo 657-0015 (JP)
• UCHIDA, Makoto
  Hirakata-shi, Osaka 573-1145 (JP)

(74) Representative: Patentanwälte
Leinweber & Zimmermann
Rosental 7,
II Aufgang
80331 München (DE)

(54) ELECTROLYTE MEMBRANE/ELECTRODE UNION FOR FUEL CELL AND PROCESS FOR PRODUCING THE SAME

(57) An electrolyte membrane-electrode assembly for a fuel cell comprises a polymer electrolyte membrane and a pair of electrodes sandwiching the electrolyte membrane, and each of the electrodes comprises a catalyst layer in contact with the polymer electrolyte membrane and a gas diffusion layer in contact with the catalyst layer. The polymer electrolyte membrane contains electronically insulating particles, which serve as spacers for separating the gas diffusion layers of the electrodes, in a region sandwiched between the electrodes. A polymer type fuel cell in which the two electrodes are reliably separated by the polymer electrolyte membrane, the internal resistance is low, and the effective reaction area is large, is provided.

FIG. 1B

EP 1 429 408 A1

# Description

Technical Field

The present invention relates to a polymer electrolyte fuel cell, particularly to an electrolyte membrane-electrode assembly thereof, and a manufacturing method thereof.

Background Art

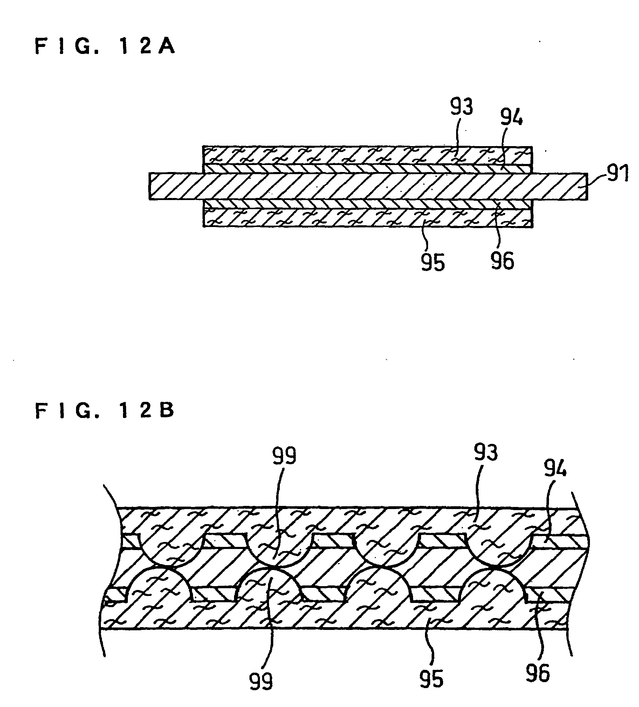

A polymer electrolyte fuel cell converts chemical energy into electric energy and heat by electrochemically reacting a fuel gas such as hydrogen with an oxidant gas containing oxygen such as air. An example of an electrolyte membrane-electrode assembly (hereinafter referred to as an MEA) constituting the power generating element of this fuel cell is illustrated in FIG. 12A. An anode-side catalyst layer 94 and a cathode-side catalyst layer 96 are provided on both sides of a polymer electrolyte membrane 91 that selectively transports protons in such a manner that they are in close contact with the membrane. These catalyst layers 94 and 96 comprise a carbon powder carrying a platinum group metal catalyst and a proton-conductive polymer electrolyte.

An anode-side gas diffusion layer 93 and a cathode-side gas diffusion layer 95 having gas permeability and electronic conductivity are provided on the outer faces of the catalyst layers 94 and 96, respectively, in such a manner that they are in close contact with each other. The gas diffusion layers 93 and 95 are normally made of a gas-permeable conductive material which is obtained by treating for example carbon paper or carbon cloth to make it water-repellent.

This MEA is sandwiched between a separator plate having a gas flow channel for supplying the fuel gas to the anode and a separator plate having a gas flow channel for supplying the oxidant gas to the cathode, to constitute a unit cell. In order to prevent the fuel gas and the oxidant gas from leaking outside and mixing together, gas sealing materials or gaskets are arranged around the gas diffusion layers so as to sandwich the polymer electrolyte membrane.

The hydrogen gas, having reached the anode-side catalyst layer through the gas diffusion layer of the anode, generates protons and electrons over the catalyst by the reaction of the following formula (1). The protons diffuse through the polymer electrolyte membrane to the cathode side. In the cathode-side catalyst layer, the oxygen reacts with the protons coming from the anode to produce water, as represented by formula (2).

$$H_2 \rightarrow 2H^+ + 2e^-  \qquad (1)$$

$$1/2O_2 + 2H^+ + 2e^- \rightarrow H_2O \qquad (2)$$

As the polymer electrolyte membrane and polymer electrolyte, a membrane of perfluorocarbon sulfonic acid which comprises a $-CF_2-$ backbone and side chains having a sulfonic acid group $(-SO_3H)$ on the terminal end, for example, commercially available under the trade names of Nafion (E.I. Du Pont de Nemours & Co. Inc.), Flemion (Asahi Glass Co., Ltd.) and Aciplex (Asahi Chemical Industry Co., Ltd.), and such a polymer electrolyte solution, are generally used. In such a polymer electrolyte, agglomeration of the sulfonic acids forms a conductive three-dimensional network, which serves as a proton conductive channel.

The performance of fuel cells is evaluated by the difference in potential (cell voltage) between the anode-side gas diffusion layer 93 and the cathode-side gas diffusion layer 95 when they are operated at the same current density. Since the components of the MEA are connected in series and in layers, the polymer electrolyte membrane 91, which is the layer having the highest internal resistance, significantly determines the cell voltage, i.e., the performance of the cell. Thus, in order to reduce the internal resistance of the MEA, or to enhance the proton conductivity, a thinner polymer electrolyte membrane is necessary.

There are two typical methods for manufacturing the conventional MEA.

A first manufacturing method is a method of first forming a catalyst layer on each surface of a polymer electrolyte membrane and then joining a gas diffusion layer to the catalyst layer. This catalyst layer is formed by applying a catalyst paste containing a polymer electrolyte and a carbon powder carrying a metal catalyst on a substrate of a film of polypropylene, polyethylene terephthalate, polytetrafluoroethylene or the like and drying it.

Subsequently, the catalyst layer formed on the substrate is transferred to each side of the polymer electrolyte membrane by a hot press or hot rollers. Thereafter, the substrate is peeled from the catalyst layer, so that the polymer electrolyte membrane having the catalyst layers is formed. In addition to this transfer method, the catalyst layers may be formed by a method of applying the catalyst paste onto the polymer electrolyte membrane by printing, spraying or the like and drying it. To these catalyst layers, a gas diffusion layer comprising carbon paper, carbon cloth or the like is thermally bonded under pressure by a hot press or hot rollers.

A second manufacturing method is as follows. A gas diffusion layer on which a catalyst layer is formed beforehand is placed on each side of a polymer electrolyte membrane in such a manner that the catalyst layer faces inward, and the gas diffusion layer is thermally bonded under pressure by a hot press or hot rollers. This catalyst layer is formed for example by a method of applying a catalyst paste onto the gas diffusion layer by a printing method or a spraying method and drying it.

Since the gas diffusion layer is made of fibrous carbon, it is difficult to make the surface thereof completely flat and smooth, and the surface usually has a large number of small projections. This may lead to the following phenomenon: in thermo compression bonding by a hot press or hot rollers or in fabrication of a unit cell, projections 99 on the gas diffusion layers 93 and 95 compress and penetrate the catalyst layers 94 and 96 and the polymer electrolyte membrane 91 so that the anode and the cathode come in contact with each other, as illustrated in FIG. 12B. It is extremely important to solve this problem in order to provide a polymer electrolyte fuel cell free from an internal short-circuit.

An object of the present invention is to solve the above-described conventional problems and provide an MEA in which an anode and a cathode are reliably separated from each other, the internal resistance is low, and the effective reaction surface area is large.

Another object of the present invention is to provide a method capable of manufacturing such an MEA with ease.

Disclosure of Invention

The present invention provides an electrolyte membrane-electrode assembly for a fuel cell comprising a polymer electrolyte membrane and a pair of electrodes sandwiching the electrolyte membrane, wherein each of the electrodes comprises a catalyst layer in contact with the polymer electrolyte membrane and a gas diffusion layer in contact with the catalyst layer, and the polymer electrolyte membrane contains electronically insulating particles for separating the gas diffusion layers of the electrodes in a region sandwiched between the electrodes.

In a preferable mode, the electronically insulating particles comprise an electrically insulating material.

In another mode, the electronically insulating particles comprise a polymer electrolyte having a higher modulus of elasticity than the polymer electrolyte membrane.

It is preferable that the gas diffusion layer of at least one of the electrodes have an electronically insulating layer which coats projections present on the surface facing the polymer electrolyte membrane.

Brief Description of Drawings

FIG. 1A is a schematic longitudinal sectional view of an electrolyte membrane-electrode assembly, after thermo compression bonding, in accordance with the present invention.
FIG. 1B is an enlarged sectional view of the main part of the electrolyte membrane-electrode assembly, after thermo compression bonding, in accordance with the present invention.
FIG. 2A is an enlarged sectional view of the main part of an electrolyte membrane-electrode assembly, before thermo compression bonding, in accordance with the present invention.
FIG. 2B is an enlarged sectional view of the main part of the electrolyte membrane-electrode assembly, after thermo compression bonding, in accordance with the present invention.
FIG. 3A is an enlarged sectional view of the main part of another electrolyte membrane-electrode assembly, before thermo compression bonding, in accordance with the present invention.
FIG. 3B is an enlarged sectional view of the main part of the another electrolyte membrane-electrode assembly, after thermo compression bonding, in accordance with the present invention.
FIG. 4 is longitudinal sectional views showing manufacturing steps of an electrolyte membrane-electrode assembly according to the first manufacturing method of the present invention.
FIG. 5 is longitudinal sectional views showing manufacturing steps of an electrolyte membrane-electrode assembly according to the second manufacturing method of the present invention.
FIG. 6 is longitudinal sectional views showing manufacturing steps of an electrolyte membrane-electrode assembly according to the third manufacturing method of the present invention.
FIG. 7 is longitudinal sectional views showing manufacturing steps of an electrolyte membrane-electrode assembly according to the fourth manufacturing method of the present invention.
FIG. 8 is a longitudinal sectional view of a unit cell of a fuel cell in an example of the present invention.
FIG. 9 is a sectional view of the main part of a gas diffusion layer having an electronically insulating layer that is formed on projections on the surface.
FIG. 10 is a longitudinal sectional view of an electrolyte membrane-electrode assembly in another example of the present invention.
FIG. 11 is an enlarged sectional view of a gas diffusion layer having an electronically insulating layer that is formed on projections on the surface.
FIG. 12A is a schematic longitudinal sectional view of a conventional electrolyte membrane-electrode assembly after thermo compression bonding.
FIG. 12B is an enlarged sectional view of the main part of the conventional electrolyte membrane-electrode assembly after thermo compression bonding.
FIG. 13 is a graph showing the operation characteristics of unit cells of examples of the present invention and a comparative example.

Best Mode for Carrying Out the Invention

An electrolyte membrane-electrode assembly for a fuel cell in accordance with the present invention contains electronically insulating particles in the region of a polymer electrolyte membrane sandwiched between two electrodes, and the electronically insulating particles are more rigid or have a higher modulus of elasticity than the polymer electrolyte.

In the present invention, electronically insulating property refers to having substantially no electronic conductivity. A preferable electronically insulating material in the present invention is an electrically insulating material. Another material is a polymer electrolyte having proton conductivity.

These particles act as spacers that separate the gas diffusion layers of the anode and the cathode from each other when the polymer electrolyte membrane is compressed by the stress applied during the manufacturing process, particularly the thermo compression bonding process of the electrodes. Thus, the particles prevent the projections on the surfaces of the gas diffusion layers from penetrating the polymer electrolyte membrane and contacting the opposing electrode. As a result, it is possible to provide an MEA having low internal resistance and no internal short-circuit.

That is, the electronically insulating particles intervening between the anode and the cathode perform the function of the spacer which prevents the electrodes from coming closer to each other than a certain interval. Therefore, when the polymer electrolyte membrane is compressed and softened during the thermo compression bonding process, the particles prevent the short-circuit caused by the contact of the projections on the gas diffusion layer of the anode or the cathode with the gas diffusion layer of the opposing electrode.

The existence of the particles serving as the spacers in the polymer electrolyte membrane makes it possible to heighten the pressure applied during the thermo compression bonding, so that the softened polymer electrolyte can be allowed to enter the catalyst layers and the gas diffusion layers. Accordingly, the area of the three-phase interface, where the reaction gas, the polymer electrolyte and the carbon carrying the catalyst coexist, is increased. As a result, it is possible to increase the effective reaction surface area of the MEA and heighten the operating voltage of the polymer electrolyte fuel cell comprising this MEA.

In a preferable mode of the present invention, in the gas diffusion layer of at least one of the electrodes, the projections on the surface facing the polymer electrolyte membrane are coated with an electronically insulating layer.

The electronically insulating layer preferably comprises an electrically insulating inorganic material and a polymer resin.

When the projections of the gas diffusion layer are coated with the electronically insulating layer, there is no fear of causing an internal short-circuit even if the projections come in contact with the gas diffusion layer of the other electrode.

The MEA of the present invention can be manufactured by the following methods.

A first method comprises the steps of: scattering electronically insulating particles over a polymer electrolyte membrane; and joining one of the electrodes to the face of the polymer electrolyte membrane having the particles and joining the other electrode to the other face.

A second method comprises the steps of: applying a polymer electrolyte solution onto a first polymer electrolyte membrane; scattering electronically insulating particles over the surface applied with the polymer electrolyte solution; drying the polymer electrolyte solution to form a composite polymer electrolyte membrane having a second polymer electrolyte membrane that contains the particles on the first polymer electrolyte membrane; and joining one of the electrodes to one face of the composite polymer electrolyte membrane and joining the other electrode to the other face.

A third method comprises the steps of: scattering electronically insulating particles over a first polymer electrolyte membrane; joining a second polymer electrolyte membrane to the face of the first polymer electrolyte membrane having the particles to form a composite polymer electrolyte membrane; and joining one of the electrodes to one face of the composite polymer electrolyte membrane and joining the other electrode to the other face.

A fourth method comprises the steps of: applying a solution containing a multifunctional monomer capable of thermal polymerization or photo polymerization and a polymer electrolyte onto a first polymer electrolyte membrane in an island form; photo-irradiating and/or heating the applied solution to form polymer electrolyte particles having a high modulus of elasticity on the first polymer electrolyte membrane; applying a polymer electrolyte solution onto the face of the first polymer electrolyte membrane having the particles, drying the applied polymer electrolyte solution to form a composite polymer electrolyte membrane having a second polymer electrolyte membrane that contains the particles; and joining one of the electrodes to one face of the composite polymer electrolyte membrane and joining the other electrode to the other face.

In the respective above-described methods, the step of joining the electrode to the polymer electrolyte membrane may comprise either of the following methods. One method comprises the step of joining a catalyst layer to the polymer electrolyte membrane and the step of joining a gas diffusion layer to the catalyst layer. The other method comprises the step of joining a gas diffusion layer having a catalyst layer to the polymer electrolyte membrane. These methods may further comprise the step of forming an electronically insulating layer on the projections on the surface of the gas diffusion layer facing the catalyst layer, before joining the gas diffusion layer to the catalyst layer.

A preferable method for forming the electronically insulating layer on the projections of the gas diffusion layer is a method of forming an electronically insulating layer on a substrate in advance and then transferring the electronically insulating layer to the projections of the gas diffusion layer. Another preferable method is a method of applying a coating material containing an electronically insulating material onto the projections of the gas diffusion layer and drying or curing it to form an electronically insulating layer.

Embodiments of the present invention are described below.

Embodiment 1

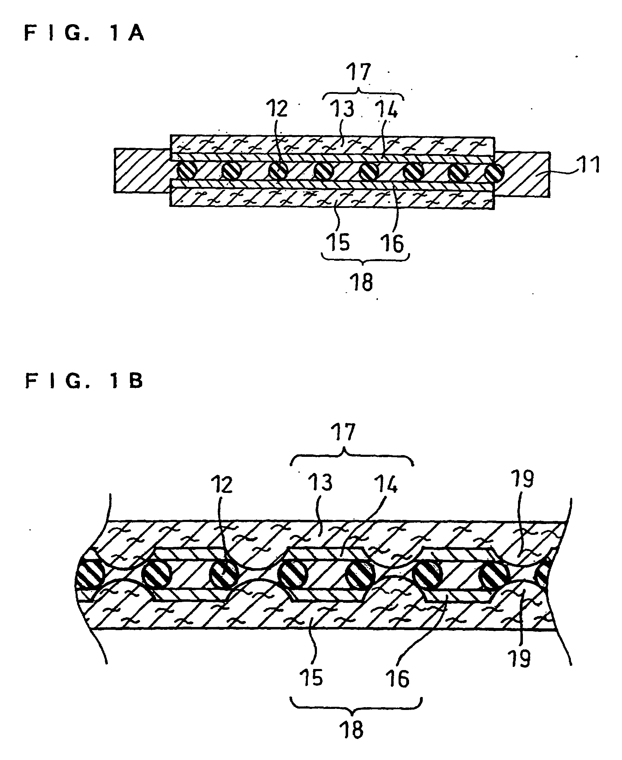

FIG. 1A and FIG. 1B illustrate an MEA of this embodiment. Electrically insulating particles 12 are dispersed in a polymer electrolyte membrane 11, and the particles 12 intervene between an anode 17 and a cathode 18, serving as spacers between the electrodes. When gas diffusion layers 13 and 15 have projections 19 on the surfaces contacting anode-side and cathode-side catalyst layers 14 and 16, the particles 12 function as the spacers, preventing the breaking of the polymer electrolyte membrane 11 and separating the anode 17 from the cathode 18 such that there is a certain interval between them even where they come closest to each other, as shown in the enlarged view of FIG. 1B.

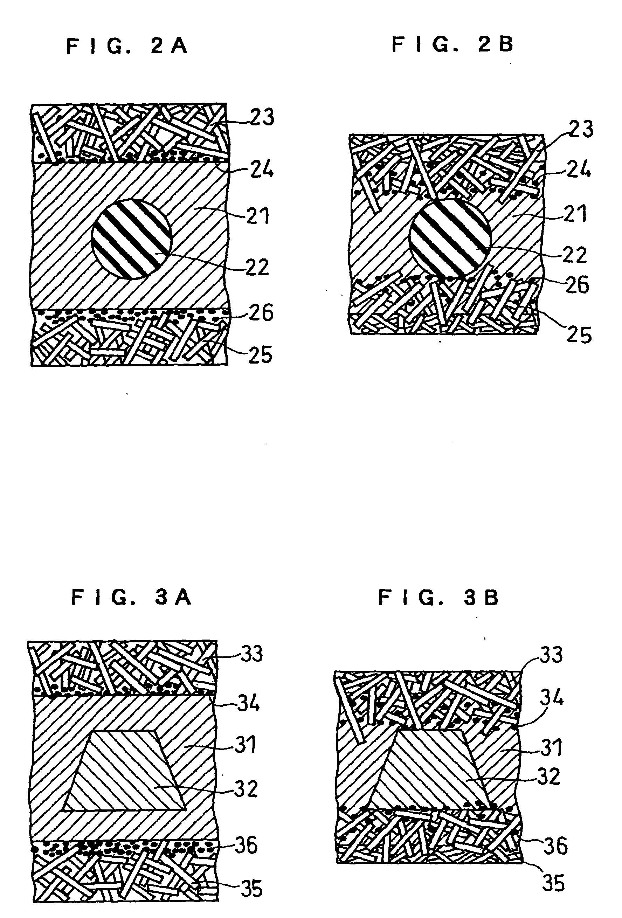

FIG. 2A and FIG. 2B are enlarged sectional views schematically showing the vicinity of the polymer electrolyte membrane and the electrodes of the MEA of FIG. 1A and FIG. 1B. In FIG. 2A illustrating the state before the thermo compression bonding, carbon particles 24 and 26, which carry the metal catalysts of the anode-side and cathode-side catalyst layers, exist between a polymer electrolyte membrane 21 and carbon fibers 23 and 25 constituting the anode-side and cathode-side gas diffusion layers. In FIG. 2B illustrating the state after the thermo compression bonding, because the polymer electrolyte membrane was heated to about the softening temperature and pressed, the polymer electrolyte membrane 21 is compressed and becomes thin such that the carbon fibers 23 and 25 and the carbon particles 24 and 26 are close to or in contact with the particles 22.

The gas diffusion layers are made of a material such as carbon paper or carbon cloth, in which the carbon fibers 23 and 25 are entwined with one another. Thus, when heated and softened, the polymer electrolyte membrane 21 enters the gaps of the network of the carbon fibers. Further, since the catalyst layers are brittle, the layer structure is partially damaged upon the thermo compression bonding, so that the carbon particles 24 and 26 are dispersed. Thus, a layer of a mixture of the dispersed carbon particles 24 and 26, the carbon fibers 23 and 25, and the polymer electrolyte membrane 21 entering between them is formed. This increases the area of the above-mentioned three phase interface necessary for the metal catalyst to act effectively. Also, since the particles 22 function as the spacers which keep the interval between the anode and the cathode constant, even if the substantial thickness of the polymer electrolyte membrane 21 which separates the electrodes is decreased upon the thermo compression bonding, the projections formed by the tip ends and projected parts of the carbon fibers 23 and 25 do not penetrate the polymer electrolyte membrane 21. FIG. 2A illustrates an example in which the diameter of the particle 22 is less than the thickness of the polymer electrolyte membrane 21. The diameter of the particle 22 may be greater than the thickness of the polymer electrolyte membrane 21, since the particle 22 may dig slightly into the carbon fibers 23 and 25.

The size or thickness of the particle corresponds to the thickness of the polymer electrolyte membrane after the compression bonding. Thus, the preferable size or thickness of the particle is determined in view of the trade-off between the proton conductivity necessary for the polymer electrolyte membrane and the cross leak of the reaction gases. From the viewpoint of the proton conductivity, the thickness of the polymer electrolyte membrane after the compression bonding is preferably 20 $\mu$m or less. Also, the cross leak of the fuel gas and the oxidant gas increases sharply when the thickness of the membrane is several $\mu$m or less. From this viewpoint, the thickness of the polymer electrolyte membrane after the compression bonding is preferably 5 $\mu$m or more. Accordingly, the size or thickness of the particle is preferably 5 to 20 $\mu$m.

In order that the particle performs the function of the spacer between the electrodes, it is preferable to select a material which is not susceptible to plastic deformation upon the thermo compression bonding, i.e., a material having such properties as a higher modulus of elasticity and a higher hardness than those of the polymer electrolyte at the temperatures of the thermo compression bonding. As the electrically insulating material for constituting the particle, glass, ceramic, inorganic or organic crystal, minerals such as mica, resin, rubber, ebonite, dietary fiber, and the like may be used. It is also possible to use an electrically conductive particle of for example metal or carbon coated with an electrically insulating material.

Any material having a proton conductive channel but having an electrically insulating property may be used as the particles 12 and 22, and such examples include a proton-conductive resin of which modulus of elasticity is heightened by cross-linking or the like, a cross-linked cation-exchange resin having proton conductivity, and an inorganic porous substance impregnated with a polymer electrolyte.

Embodiment 2

FIG. 3A and FIG. 3B are sectional views schematically showing the vicinity of a polymer electrolyte membrane and electrodes of an MEA in this embodiment. In FIG. 3A illustrating the state before the thermo compression bonding, carbon particles 34 and 36, which carry the metal catalysts of anode-side and cathode-side catalyst layers, exist between a polymer electrolyte membrane 31 and carbon fibers 33 and 35 constituting anode-side and cathode-side gas diffusion layers. In FIG. 3B illustrating the state after the thermo compression bonding, the thickness of the polymer electrolyte membrane 31 is reduced to a thickness almost the same as that of a polymer electrolyte particle 32 having a higher modulus of elasticity. And, the carbon fibers 33 and 35 are so close to the particle 32 as to almost contact it.

In FIG. 3B, due to the thermo compression bonding, the carbon fibers 33 and 35, the carbon particles 34 and 36, and the softened polymer electrolyte membrane 31 form a three-phase interface, increasing the effective reaction surface area of the MEA, in the same manner as in FIG. 2B. In this MEA, in which the polymer electrolyte membrane contains the polymer electrolyte particle having a higher modulus of elasticity than that around it. the spacer portion also has proton conductivity. It is thus possible to heighten the operating voltage of the polymer electrolyte fuel cell comprising this MEA.

The polymer electrolyte portion having a higher modulus of elasticity is produced, for example, as follows. A solution is prepared by dissolving a polymerizable multifunctional monomer and a polymer electrolyte in an organic solvent, water or a mixture solvent thereof at concentrations of 0.1 to 10 wt% and 5 to 20 wt%, respectively, and this solution is applied onto a polymer electrolyte membrane having a lower modulus of elasticity and is exposed to heat or ultraviolet rays for cross-linking polymerization. Examples of the multifunctional monomer capable of thermal polymerization or photo polymerization, i.e., the cross-linkable monomer include ethylene glycol dimethacrylate, diethylene glycol dimethacrylate, triethylene glycol dimethacrylate, neopentyl glycol dimethacrylate, propylene ethylene glycol dimethacrylte, 1,4-butanediol dimethacrylate, 1,3-butanediol dimethacrylate, 1,6-hexanediol dimethacrylate, 1,9-nonanediol dimethacrylate, 1,10-decanediol dimethacrylate, trimethylolpropane trimethacrylate, glycerol dimethacrylate, 2-hydroxy-3-(acryloyloxy)propyl methacrylate, triethylene glycol diacrylate, propylene ethylene glycol diacrylate, 1,6-hexanediol diacrylate, 1,9-nonanediol diacrylate, dimethylol tri-cyclodecane diacrylte, trimethylol propane triacrylate, pentaerythritol triacrylate, neopentylglycol hydroxypivalate diacrylate, polytetramethylene glycol diacrylate and ditrimethylolpropane tetraacrylate.

Embodiment 3

A first manufacturing method of an electrolyte membrane-electrode assembly in accordance with the present invention is described. This manufacturing method has an advantage of being capable of manufacturing, by a quite simple process, an MEA in which electronically insulating particles serving as spacers are interposed between the anode and the cathode.

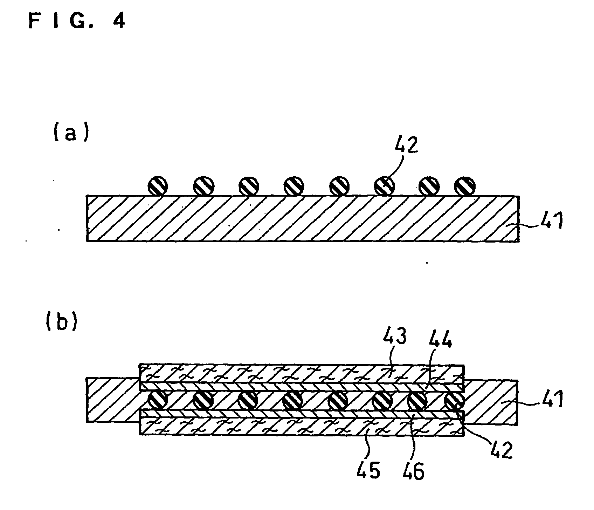

FIG. 4 illustrates a manufacturing process of an MEA. However, the projections on the gas diffusion layers are omitted from this figure.

First, as illustrated in FIG. 4 (a), electronically insulating particles 42 are evenly scattered over a polymer electrolyte membrane 41. Subsequently, an anode-side catalyst layer 44 and a cathode-side catalyst layer 46 are formed on both sides of the polymer electrolyte membrane 41 by a transfer method. To both sides of the resultant polymer electrolyte membrane with the catalyst layers, an anode-side gas diffusion layer 43 and a cathode-side gas diffusion layer 45 are bonded under pressure. In this way, an MEA in which the electronically insulating particles 42 are interposed as the spacers between the anode and the cathode is produced, as illustrated in FIG. 4 (b). In this compression bonding step, thermo compression bonding is preferably performed by hot rollers, a hot press or the like.

In scattering the particles 42, it is preferable to prevent the particles from scattering beyond the region of the polymer electrolyte membrane contacting the gas diffusion layers. For this, it is preferable to employ a method of placing a metal mask having a window which is as large as the gas diffusion layer on the polymer electrolyte membrane and scattering the particles. If many particles are present in the region not contacting the gas diffusion layers, i.e., the periphery of the polymer electrolyte membrane, the adhesion of the gaskets to the polymer electrolyte membrane may become weak, impairing the gas tightness.

Embodiment 4

A second manufacturing method of an MEA in accordance with the present invention is described.

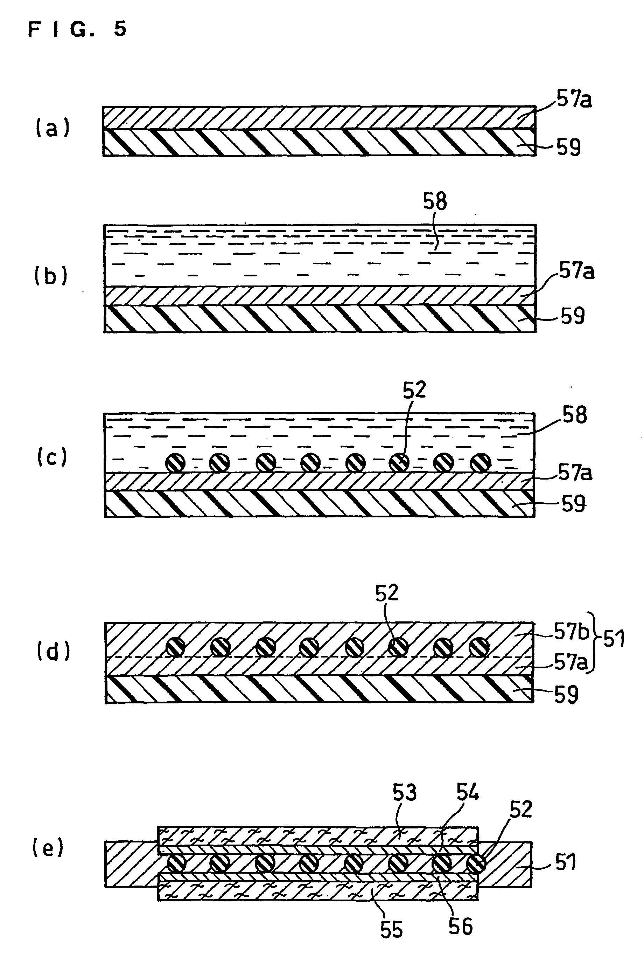

FIG. 5 illustrates a manufacturing process of the MEA. However, the projections on the gas diffusion layers are omitted. First, as illustrated in FIG. 5 (a), a first polymer electrolyte membrane 57a is formed on a substrate 59 by a casting method. Subsequently, a polymer electrolyte solution 58 is applied onto the polymer electrolyte membrane 57a, as illustrated in FIG. 5 (b). Then, as illustrated in FIG. 5 (c), while the applied polymer electrolyte solution 58 do not dry, electronically insulating particles 52 are evenly scattered over the applied surface and allowed to sink. Thereafter, the applied polymer electrolyte solution 58 is dried to remove the solvent. As a result, as illustrated in FIG. 5 (d), a second polymer electrolyte membrane 57b is formed on the first polymer electrolyte membrane 57a. Accordingly, a composite polymer electrolyte membrane 51 having the scattered particles 52 in the intermediate layer is formed.

On both sides of the composite polymer electrolyte membrane 51, an anode-side catalyst layer 54 and a cathode-side catalyst layer 56 are formed, in the same manner as in FIG. 4. Then, an anode-side gas diffusion layer 53 and a cathode-side gas diffusion layer 55 are bonded under pressure to both sides thereof. In this way, as illustrated in FIG. 5 (e), an MEA in which the electronically insulating particles 52 are interposed as the spacers between the anode and the cathode is produced. In this compression bonding step, thermo compression bonding is preferably performed by hot rollers, a hot press or the like.

Embodiment 5

A third manufacturing method of an MEA in accordance with the present invention is described.

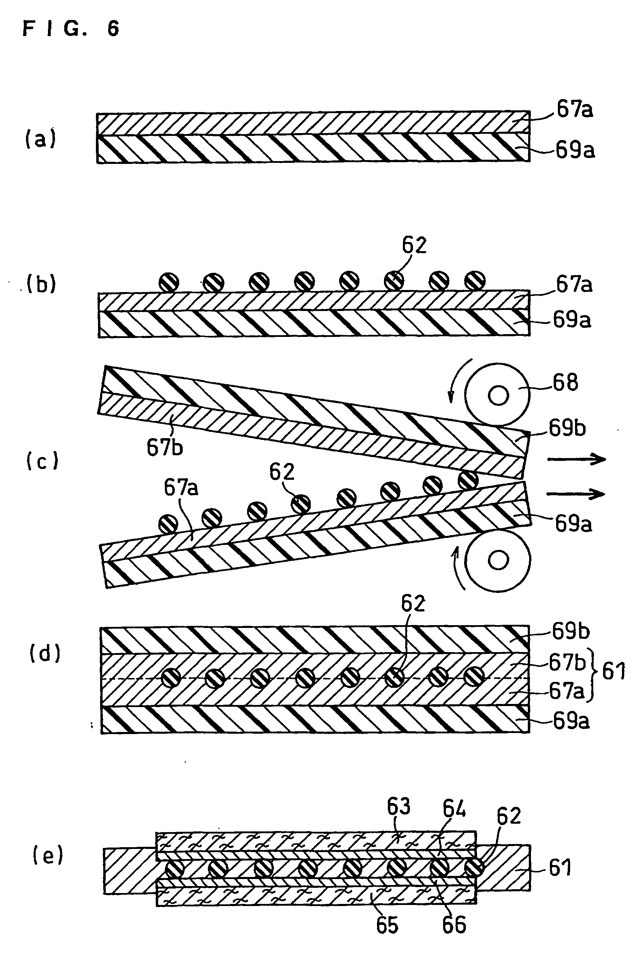

FIG. 6 illustrates a manufacturing process of the MEA. However, the projections on the gas diffusion layers are omitted. First, as illustrated in FIG. 6 (a), a first polymer electrolyte membrane 67a is formed on a substrate 69a by a casting method. Subsequently, as illustrated in FIG. 6 (b), electronically insulating particles 62 are scattered over the first polymer electrolyte membrane 67a. Then, as illustrated in FIG. 6 (c), a second polymer electrolyte membrane 67b formed on another substrate 69b by a casting method is placed on the face of the first polymer electrolyte membrane 67a on which the particles 62 are scattered, and the two membranes are bonded together under pressure by hot rollers 68. Accordingly, as illustrated in FIG. 6 (d), the first and second polymer electrolyte membranes 67a and 67b are jointed together, to form a composite polymer electrolyte membrane 61 where the particles 62 are dispersed in the intermediate layer. On both sides of the composite polymer electrolyte membrane 61, an anode-side catalyst layer 64 and a cathode-side catalyst layer 66 are formed in the same manner as in FIG. 4. Then, an anode-side gas diffusion layer 63 and a cathode-side gas diffusion layer 65 are bonded under pressure. In this way, as illustrated in FIG. 6 (e), an MEA in which the electronically insulating particles 62 are interposed as the spacers between the anode and the cathode is produced.

Embodiment 6

A fourth manufacturing method of an MEA in accordance with the present invention is described.

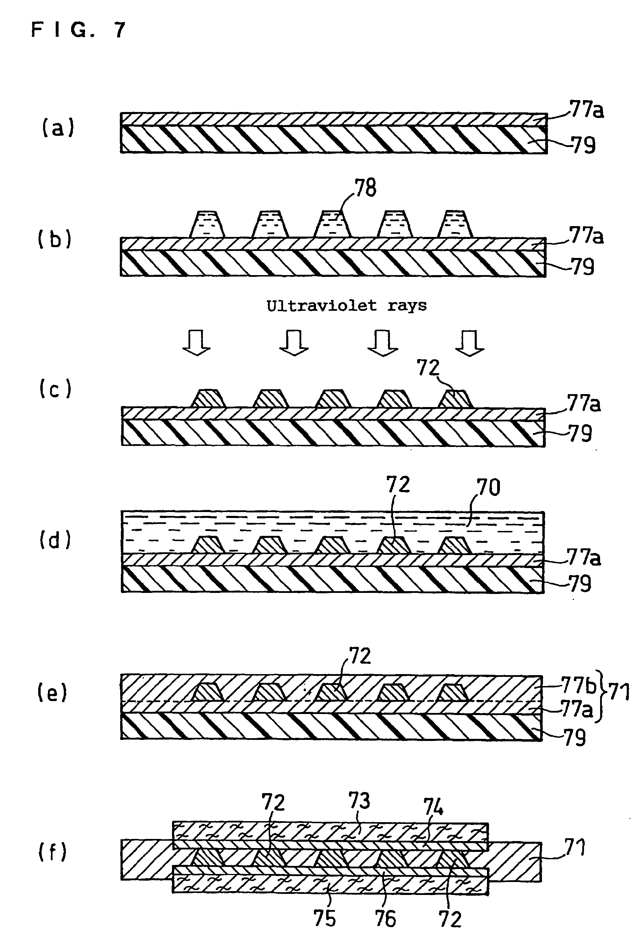

FIG. 7 illustrates a manufacturing process of the MEA. However, the projections on the gas diffusion layers are omitted. First, as illustrated in FIG. 7 (a), a first polymer electrolyte membrane 77a is formed on a substrate 79 by a casting method. Subsequently, as illustrated in FIG. 7 (b), a polymer electrolyte solution 78 containing a multifunctional monomer is applied onto the first polymer electrolyte membrane 77a such that the solution is scattered in an island pattern. Then, as illustrated in FIG. 7 (c), the surface onto which the solution 78 is applied is irradiated with ultraviolet rays to cure the solution. In this way, particles or pieces 72 comprising a polymer electrolyte having a higher modulus of elasticity are formed in an island form.

Thereafter, as illustrated in FIG. 7 (d), a polymer electrolyte solution 70 is applied onto the surface on which the particles 72 are formed, and is dried to form a second polymer electrolyte membrane 77b. By this, as illustrated in FIG. 7 (e), a composite polymer electrolyte membrane 71 where the polymer electrolyte particles 72 having a higher modulus of elasticity are scattered in the intermediate layer is formed. In the same manner as in FIG. 4, an anode-side catalyst layer 74 and a cathode-side catalyst layer 76 are formed on both sides of the composite polymer electrolyte membrane 71, and an anode-side gas diffusion layer 73 and a cathode-side gas diffusion layer 75 are bonded under pressure to both sides thereof. In this way, as illustrated in FIG. 7 (f), an MEA in which the cured polymer electrolyte particles or pieces are interposed as the spacers between the anode and the cathode is produced.

In the respective foregoing manufacturing processes, the catalyst layers are formed beforehand on the polymer electrolyte membrane by a transfer method, and the gas diffusion layers are bonded to the catalyst layers under pressure. Instead, it is also possible in the manufacturing methods of the present invention to form catalyst layers on gas diffusion layers and bond the resultant anode and cathode to both sides of a polymer electrolyte membrane. Alternatively, it is possible to form catalyst layers by applying a catalyst paste onto a polymer electrolyte membrane by printing or the like and bond gas diffusion layers to the catalyst layers.

In the compression bonding step of the respective foregoing manufacturing processes, a hot pressing device, hot rollers or the like may be used. Upon the thermo compression bonding, the pressure is preferably 20 to 50 kg/cm$^2$, and the temperature is preferably 120 to 160°C.

Example 1

According to the manufacturing process as illustrated in FIG. 4, an MEA was produced.

30 ml of an ethanol solution containing 7% by weight of a polymer electrolyte (Flemion manufactured by Asahi Glass Co., Ltd.) was introduced into a petri dish of 20 cm in diameter and allowed to stand all day and night. It was then dried at 130 °C for 30 minutes to form the polymer electrolyte membrane 41 having a thickness of 30 μm by a casting method. On this polymer electrolyte membrane 41 was placed a metal mask having a 6 cm × 6 cm square window. This was covered with a hollow hemispheric container of about 50 cm in diameter made of acrylic resin, and a small number of epoxy resin particles (Micropearl manufactured by Sekisui Chemical Co., Ltd.) of 20 μm in diameter were sprayed as the electrically insulating particles 42 with a dry nitrogen gas from the hole of the container located in the top. The particles 42 were then evenly scattered over the polymer electrolyte membrane 41.

Subsequently, a catalyst paste was applied onto a substrate of polypropylene film (manufactured by Toray Industries, Inc.) having a thickness of 50 μm with a bar coater and dried at room temperature. Thereafter, it was cut into a square of 6 cm × 6 cm to form a catalyst layer with the substrate. The platinum content of this catalyst layer was approximately 0.2 mg/cm$^2$. The catalyst paste was prepared by adding 15 cc of distilled water to 5.0 g of a carbon powder carrying a platinum catalyst, adding to it 25.0 g of an ethanol solution containing 9% by weight of a polymer electrolyte (Flemion manufactured by Asahi Glass Co., Ltd.), and stirring the mixture with a stirrer while applying ultrasonic vibration thereto for one hour.

Then, the catalyst layer with the substrate was placed on the region of the polymer electrolyte membrane 41 sprayed with the particles 42 and the other side of the polymer electrolyte membrane 41. This was sandwiched between polytetrafluoroethylene sheets and then heat-resistant rubber sheets and pressed by a hot pressing device under the conditions of a pressure of 40 kg/cm$^2$ and a temperature of 135°C so that the catalyst layers 44 and 46 were transferred to both sides of the polymer electrolyte membrane 41. Thereafter, the substrates were peeled therefrom.

The gas diffusion layers 43 and 45 were placed on both sides of the polymer electrolyte membrane with the catalyst layers thus formed, and this was sandwiched between polytetrafluoroethylene sheets and pressed by a hot pressing device at 135°C to produce an MEA. The interval between the anode-side catalyst layer 44 and the cathode-side catalyst layer 46 of the MEA thus produced was 18 to 20 μm, and this interval was also even. The gas diffusion layers 43 and 45 were prepared by immersing a carbon paper (manufactured by Toray Industries, Inc.) in an aqueous dispersion of fluorocarbon resin (ND-1 manufactured by Daikin Industries, Ltd.) and thereafter baking it at 300°C.

Comparative Example 1

An MEA was produced in the same manner as in Example 1 except that the epoxy resin particles were not sprayed over the polymer electrolyte membrane. However, the pressure applied by a hot pressing device in the compression bonding step was lower by 30% than that of Example 1 in order to prevent the contact of the anode and the cathode caused by the breaking of the polymer electrolyte membrane. The interval between the anode-side catalyst layer and the cathode-side catalyst layer of the produced MEA was 24 to 28 μm.

Example 2

According to the manufacturing process as illustrated in FIG. 5, an MEA was produced. An ethanol solution containing 7% by weight of a polymer electrolyte (Flemion manufactured by Asahi Glass Co., Ltd.) was applied onto the substrate 59 of a polypropylene film (Toray Industries, Inc.) having a thickness of 50 μm with a mini dye coater and allowed to stand at room temperature. It was then dried at 130 °C for 10 minutes to form the polymer electrolyte membrane 57a having a thickness of 5 μm. Subsequently, an ethanol solution containing 7% by weight of a polymer electrolyte (Flemion manufactured by Asahi Glass Co., Ltd.) was applied as the polymer electrolyte solution 58 onto the polymer electrolyte membrane 57a with a mini dye coater, and the electrically insulating particles 52 the same as those of Example 1 were evenly sprayed on the applied surface immediately after the application. Subsequently, this was allowed to stand at room temperature and was then dried at 130°C for 30 minutes to form the composite polymer electrolyte membrane 51 having a thickness of 30 μm.

Thereafter, in the same manner as in Example 1, the catalyst layers 54 and 56 were transferred to both sides of the composite polymer electrolyte membrane 51, the gas diffusion layers 53 and 55 were placed on the outer faces of the catalyst layers 54 and 56, respectively, and this was pressed to produce an MEA. The interval between the anode-side catalyst layer 54 and the cathode-side catalyst layer 56 was 18 to 20 μm, and this interval was also even.

Example 3

According to the manufacturing process as illustrated in FIG. 7, an MEA was produced. In the same manner as in Example 2, the polymer electrolyte membrane 77a having a thickness of 5 μm was formed on the substrate 79, and the composite polymer electrolyte solution 78 was screen printed on the polymer electrolyte membrane 77a with a printing plate having a 1-mm-square mosaic pattern. As the composite polymer electrolyte solution 78, an ethanol solution containing a polymer electrolyte (Flemion manufactured by Asahi Glass Co., Ltd.), a cross-linkable monomer (1,6-hexane diol diacrylate), and a UV polymerization initiator (Darocure 1173 manufactured by Ciba-Geigy Japan Ltd.) at concentrations of 9%, 2%, and 0.1% by weight, respectively, was used.

The composite polymer electrolyte solution 78 printed on the polymer electrolyte membrane 77a was dried at room temperature, and the printed surface was then radiated with ultraviolet rays by a high-pressure mercury lamp at 100 mW/cm$^2$ for 60 seconds and dried at 130°C for 30 minutes. As a result, the monomer in the printed composite polymer electrolyte solution 78 became cross-linked and polymerized, forming the cured polymer electrolyte particles or pieces having a higher modulus of elasticity. Subsequently, an ethanol solution containing 7% by weight of a polymer electrolyte (Flemion manufactured by Asahi Glass Co., Ltd.) was applied onto the surface of the polymer electrolyte membrane 77a having the particles or pieces 72, was allowed to stand at room temperature, and was dried at 130°C for 30 minutes, to form the composite polymer electrolyte membrane 71 having a thickness of 30 μm.

Thereafter, in the same manner as in Example 1, the catalyst layers 74 and 76 were transferred to both sides of the composite polymer electrolyte membrane 71, and the gas diffusion layers were bonded under pressure to produce an MEA. The interval between the anode-side catalyst layer 74 and the cathode-side catalyst layer 76 was 20 to 22 μm, and this interval was also even.

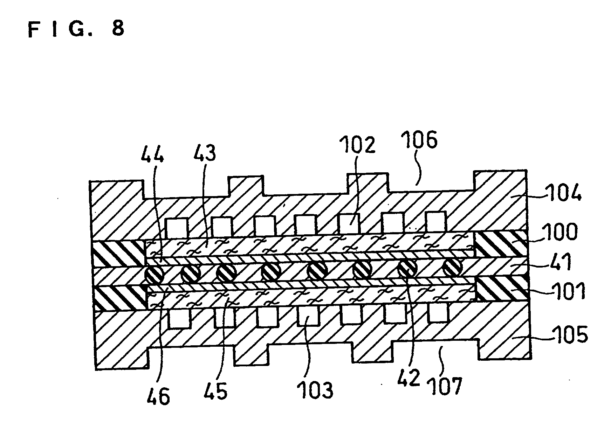

Using the MEAs of Examples 1 to 3 and Comparative Example 1, unit cells were fabricated. FIG. 8 illustrates such a typical example and is a sectional view of a unit cell using the MEA of Example 1. First, gaskets 100 and 101 were bonded to both sides of the periphery of the polymer electrolyte membrane 41 of the MEA by applying heat and pressure thereto, to form the MEA with the gaskets. Separator plates 104 and 105 having an anode-side gas flow channel 102 and a cathode-side gas flow channel 103, respectively, were joined to the outer faces of the gas diffusion layers 43 and 45. Further, cooling water flow channels 106 and 107 were provided on the outer faces of the separator plates 104 and 105.

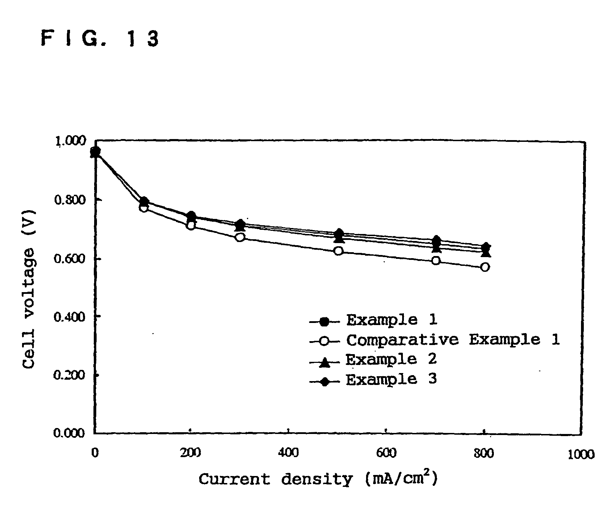

While the respective unit cells thus produced were kept at a temperature of 75°C, a hydrogen gas heated and humidified to a dew point of 70°C was supplied to the anode side and air heated and humidified to a dew point of 30°C was supplied to the cathode side. These unit cells were operated under the conditions of 70% hydrogen utilization rate and 40% oxygen utilization rate, and the relationship between the discharge current density and the cell voltage was examined. FIG. 13 shows the results.

FIG. 13 indicates that the cells of Examples 1 to 3 exhibit similarly good characteristics although they were operated under a rather dry condition. On the other hand, the cell of Comparative Example 1 exhibited lower cell voltages than those of Examples 1 to 3. The cross sections of the MEAs were observed. In the cell of Comparative Example 1, the interval between the anode and the cathode was 24 to 28 μm, which is greater than those of Examples 1 to 3, and it was therefore confirmed that the thickness of the electrolyte membrane was greater. It is thought that this caused an increase in the internal resistance of the cell of Comparative Example 1, resulting in a decrease in cell voltage. Also, the cell of Comparative Example 1 was found to have some very thin portions where the interval between the electrodes was

locally 10 μm, and it was therefore found that there was a danger that the polymer electrolyte membrane might break to bring the anode in contact with the cathode depending on the balance of the pressure applied during the thermo compression bonding.

Embodiment 7

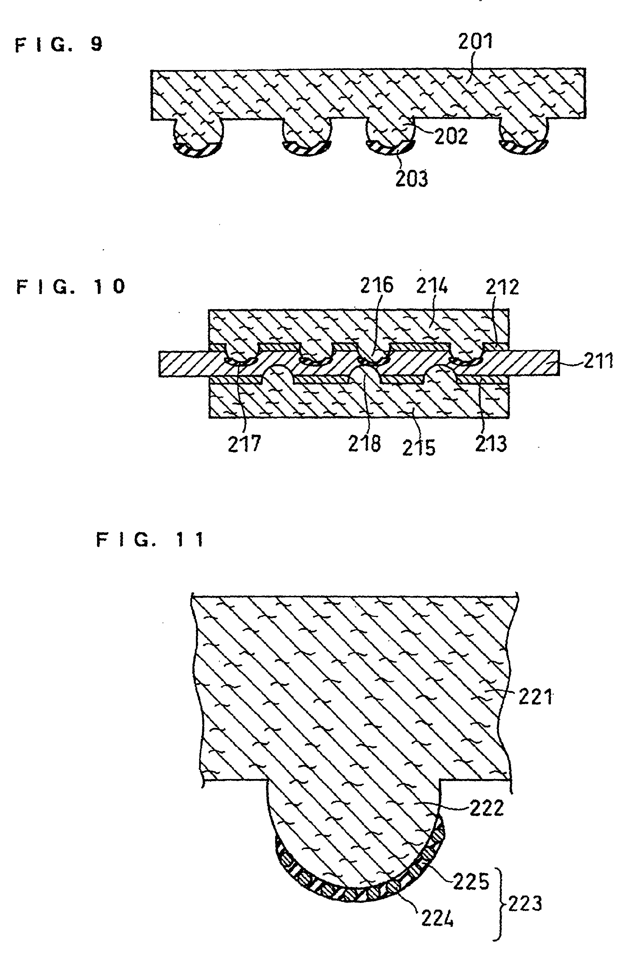

FIG. 9 is a schematic sectional view of the main part of a gas diffusion layer of which projections are coated with an electronically insulating layer.

An electronically insulating layer 203 is formed on the top faces of projections 202 on the surface of a gas diffusion layer 201 made of a porous carbon material.

FIG. 10 is a schematic sectional view of an MEA comprising a gas diffusion layer on which the above-mentioned electronically insulating layer is formed. An anode-side catalyst layer 212 and a cathode-side catalyst layer 213 are joined to both sides of a polymer electrolyte membrane 211. An anode-side gas diffusion layer 214 and a cathode-side gas diffusion layer 215 are joined to the outer faces of the catalyst layers.

In FIG. 10, an electronically insulating layer 217 is formed only on the top faces of projections 216 on the surface of the anode-side gas diffusion layer 214. When the projections 216 penetrate the anode-side catalyst layer 212 and the polymer electrolyte membrane 211 and come in physical contact with projections 218 on the surface of the cathode-side gas diffusion layer 215, the electronically insulating layer 217 prevents the direct electrical contact of the projections 216 with the cathode-side gas diffusion layer 215, so that an internal short-circuit does not occur. In this figure, the electronically insulating particles serving as the spacers for separating the gas diffusion layers are not illustrated. By providing the electronically insulating layer, it is possible to ensure the above-described prevention of an internal short-circuit by the electronically insulating particles.

The electronically insulating layer may take, for example, the form of a dot, line, plane or dome, depending on the shape of the projections on the surface of the gas diffusion layer. Also, powdery insulating particles may be attached to the projections.

The electronically insulating layer must not be destroyed upon the contact of the projections with the polymer electrolyte membrane and the opposite electrode during the step such as the thermo compression bonding in the manufacturing process of the MEA. It is therefore preferable to select a material having high hardness particularly when the electronically insulating layer is thin.

As the inorganic material for forming the electronically insulating layer, glass, ceramic, minerals such as mica and various inorganic crystals may be used. Among them, materials that are stable in an electrochemically corrosive atmosphere, for example, inorganic compounds such as silicon nitride and inorganic oxides such as silicon oxide, alumina and titanium oxide are particularly preferable. A layer comprising such an inorganic insulating material is formed, for example, by applying onto the projections a mixed application liquid comprising such inorganic insulating particles and a polymerizable resin material or a mixed application solution comprising such inorganic insulating particles, a polymerizable resin material and a dispersion medium having low vapor pressure at room temperature such as alcohols, glycols, glycerin, ketons or hydrocarbons and drying it.

As the resin material for forming the electronically insulating layer, it is possible to use resins which are originally fluid or liquid and form cross-links to cause an increase in modulus of elasticity when heated or radiated with ultraviolet rays or radioactive rays. As such resins, the multi-functional monomers capable of thermal or ultraviolet polymerization listed in Embodiment 2 are used.

Although these polymerizable resins may be applied singly to the projections, it is more preferable to mix them with the particles of the above-mentioned inorganic insulating material such as silicone nitride, silicon oxide or alumina for use, in order to further heighten the electrically insulating property of the electronically insulating layer. The applied polymerizable resin can be cured by heating, radiation of ultraviolet rays or radioactive rays, or the like during the thermo compression bonding or fabrication step. The above-described method of curing the polymerizable resin in the step subsequent to the application is also preferable from the viewpoint of production.

FIG. 11 schematically illustrates an electronically insulating layer 223 formed on projections 222 on the surface of a gas diffusion layer 221. The layer 223 comprises an inorganic insulating material 224 and a polymer resin 225.

A resin material other than the polymerizable resins may be mixed with an inorganic insulating material for use. In addition, it is also possible to use resins such as rubber and ebonite, various insulating materials such as dietary fiber, proton conductive resins of which modulus of elasticity is heightened by cross-linking or the like, cross-linked cation-exchange resins having proton conductivity, and the like as the materials for forming the electronically insulating layer.

A first method for forming an electronically insulating layer on projections on the surface of a gas diffusion layer comprises the step of forming an electronically insulating layer on a substrate comprising a film of polypropylene, polyethylene terephthalate or the like and the step of placing the electronically insulating layer on one face of the gas diffusion layer and transferring the electronically insulating layer to the projections on the surface of the gas diffusion layer by compression bonding, roller pressing or the like. According to this method, the electronically insulating layer can be preferentially formed on the projections present on the surface of the gas diffusion layer facing the polymer electrolyte membrane.

The electronically insulating layer can be formed by applying for example a mixture of a fluid or liquid resin material and an inorganic electronically insulating material, or a dispersion of inorganic particles in a dispersion medium (these are generically named coating material) onto a substrate with a dye coater or the like and drying or curing it. As the transfer method, there is a method of drying or curing the applied layer on the substrate to form an electronically insulating layer and transferring it to the gas diffusion layer. It is also possible to employ a method of transferring the applied layer, while it is uncured, to the gas diffusion layer and curing the applied layer in a subsequent step to form an electronically insulating layer.

A second method for forming an electronically insulating layer on projections on the surface of a gas diffusion layer comprises the step of applying the above-mentioned coating material containing an electronically insulating material onto projections on the surface of a gas diffusion layer on which a catalyst layer is to be formed and the step of curing it by drying, heating or radiation of ultraviolet rays or radioactive rays. As the method for applying the coating material, it is preferable to employ, for example, a printing method using a thick metal mask and a doctor blade of which blade position is set high. According to this method, the coating material can be preferentially applied onto the projections on the surface of the gas diffusion layer.

Both of the above methods can effectively prevent the adhesion of the electronically insulating layer to the other parts of the gas diffusion layer than the projections.

Example 4

30 ml of an ethanol solution containing 7% by weight of a polymer electrolyte (Flemion manufactured by Asahi Glass Co., Ltd.) was introduced into a petri dish of 20 cm in diameter and allowed to stand all day and night. It was then dried at 130 °C for 30 minutes to form a cast membrane of the polymer electrolyte having a thickness of 30 $\mu$m.

Subsequently, 50% by weight of a platinum catalyst having an average particle size of 2 nm was carried on carbon particles (Ketjen Black EC manufactured by Ketjen Black International Company) having an average particle size of 30 nm. A catalyst paste was prepared by adding 15 cc of distilled water to 5.0 g of this catalyst-carrying carbon powder, adding to it 25.0 g of an ethanol solution containing 9% by weight of a polymer electrolyte (Flemion manufactured by Asahi Glass Co., Ltd.), and stirring the mixture with a stirrer while applying ultrasonic vibration thereto for one hour. This catalyst paste was applied onto a substrate of a polypropylene film (manufactured by Toray Industries, Inc.) having a thickness of 50 $\mu$m with a bar coater and dried at room temperature. It was then cut into a square of 6 cm × 6 cm to form the substrate with a catalyst layer. The platinum content of the catalyst layer was approximately 0.2 mg/cm$^2$.

Thereafter, the polypropylene film with the catalyst layer was placed on each side of the above-described polymer electrolyte membrane such that the catalyst layer faced inward, and this was sandwiched between polytetrafluoroethylene sheets and then heat-resistant rubber sheets and pressed by a hot pressing device at 135°C. Thereafter, the polypropylene film was peeled from the catalyst layers. In this way, the catalyst layer was formed on each side of the polymer electrolyte membrane by a transfer method.

On the other hand, a carbon cloth of approximately 400 μm in thickness (CARBOLON GF-20-31E manufactured by Nippon Carbon Co., Ltd.) was immersed in an aqueous dispersion of fluorocarbon resin (ND-1 manufactured by Daikin Industries, Ltd.) and baked at 300°C to make it water repellent. A coating material paste containing an insulating material was printed on the carbon cloth. Subsequently, the printed coating material was radiated with ultraviolet rays by a high-pressure mercury lamp at 100 mW for 120 seconds to cross-link and cure the polymerizable monomer in the coating material. In this way, a gas diffusion layer comprising the water-repellent carbon cloth of which projections on the surface were coated with an insulating layer, was obtained.

The coating material was prepared by mixing silica particles having a size of approximately 30 nm (AEROSIL #50 manufactured by Nippon Aerosil Co., Ltd.), ethylene glycol dimethacrylate (manufactured by KYOEISHA CHEMICAL CO.,LTD) which is a polymerizable monomer, and a photo polymerization initiator (Darocure manufactured by Ciba Specialty Chemicals Ltd.) in a weight ratio of 1:5:0.1. The coating material was printed, using a metal mask having a 0.3 mm square window and a doctor blade. The blade height of the doctor blade was adjusted while checking with a microscope that the paste was applied onto only the projections on the surface of the carbon cloth.

The polymer electrolyte membrane with the catalyst layers produced in the above manner was sandwiched between the gas diffusion layers such that the insulating layers faced inward, and this was sandwiched between polytetrafluoroethylene sheets and pressed by a hot pressing device at 135°C to produce an MEA.

Comparative Example 2

A carbon cloth of approximately 400 μm in thickness (CARBOLON GF-20-31E manufactured by Nippon Carbon Co., Ltd.) was immersed in an aqueous dispersion of fluorocarbon resin (ND-1 manufactured by Daikin Industries, Ltd.) and baked at 300°C to make it water repellent. Except that this was used as the gas diffusion layer just as it was, an MEA was produced in the same manner as in Example 4.

Using the MEAs of the Example 4 and Comparative Example 2, unit cells were fabricated in the same manner as in

Example 1.

While the respective unit cells were kept at 75°C, a hydrogen gas heated and humidified to a dew point of 70°C was supplied to the anode side and air heated and humidified to a dew point of 70°C was supplied to the cathode side. These unit cells were operated under the conditions of 70% hydrogen utilization rate and 40% air utilization rate, and the voltages of the unit cells with no load were examined. As a result, the voltage of the cell of Example 4 was 0.99 V, while the voltage of the cell of Comparative Example 2 was 0.88 V. Accordingly, it was confirmed that although the unit cell of Comparative Example 2 caused a short-circuit between the gas diffusion layers, the unit cell of Example 4 was effectively prevented from causing an internal short-circuit.

Of each of the above-mentioned unit cells, 100 cells were stacked to form a cell stack. A stainless steel current collector plate, an insulator plate and an end plate were joined to each end of the cell stack, and the resultant stack was secured by clamping rods. The clamping pressure was 15 kgf/cm$^2$ per separator area. Each of the cell stacks was continuously operated for 1,000 hours under the same conditions as those of the above-mentioned unit cells, and the change in open-circuit voltage during the continuous operation was examined. As a result, the average drop in cell voltage per unit cell was as small as 2 mV in Example 4, whereas the voltage drop was as large as 50 mV in Comparative Example 2. Accordingly, it was confirmed that the cell stacks of Examples of the present invention had high reliability and durability and were prevented from causing an internal short-circuit.

Industrial Applicability

The present invention can provide an MEA which is free from a short-circuit between electrodes and has low internal resistance and large effective reaction surface area. The use of this MEA enables production of a polymer fuel cell with high reliability.

**Claims**

1. An electrolyte membrane-electrode assembly for a fuel cell comprising a polymer electrolyte membrane and a pair of electrodes sandwiching said electrolyte membrane, wherein each of said electrodes comprises a catalyst layer in contact with said polymer electrolyte membrane and a gas diffusion layer in contact with said catalyst layer, and said polymer electrolyte membrane contains electronically insulating particles, which serve as spacers for separating the gas diffusion layers of the electrodes, in a region sandwiched between said electrodes.

2. The electrolyte membrane-electrode assembly for a fuel cell in accordance with claim 1, wherein said particles comprise an electrically insulating material.

3. The electrolyte membrane-electrode assembly for a fuel cell in accordance with claim 1, wherein said particles comprise a polymer electrolyte having a higher modulus of elasticity than said polymer electrolyte membrane.

4. The electrolyte membrane-electrode assembly for a fuel cell in accordance with claim 1, wherein the gas diffusion layer of at least one of said electrodes has an electronically insulating layer which coats projections present on the surface facing said polymer electrolyte membrane.

5. The electrolyte membrane-electrode assembly for a fuel cell in accordance with claim 4, wherein said insulating layer comprises an electrically insulating inorganic material and a polymer resin.

6. A method for manufacturing an electrolyte membrane-electrode assembly for a fuel cell, comprising the steps of:

scattering electronically insulating particles over a polymer electrolyte membrane; and
joining one of the electrodes to the face of said polymer electrolyte membrane having said particles and joining the other electrode to the other face.

7. A method for manufacturing an electrolyte membrane-electrode assembly for a fuel cell, comprising the steps of:

applying a polymer electrolyte solution onto a first polymer electrolyte membrane;
scattering electronically insulating particles over the surface applied with said polymer electrolyte solution;
drying said polymer electrolyte solution to form a composite polymer electrolyte membrane having a second polymer electrolyte membrane that contains said particles on the first polymer electrolyte membrane; and
joining one of the electrodes to one face of said composite polymer electrolyte membrane and joining the other electrode to the other face.

8. A method for manufacturing an electrolyte membrane-electrode assembly for a fuel cell, comprising the steps of:

scattering electronically insulating particles over a first polymer electrolyte membrane;
joining a second polymer electrolyte membrane to the face of said first polymer electrolyte membrane having said particles to form a composite polymer electrolyte membrane; and
joining one of the electrodes to one face of said composite polymer electrolyte membrane and joining the other electrode to the other face.

9. A method for manufacturing an electrolyte membrane-electrode assembly for a fuel cell, comprising the steps of:

applying a solution containing a multifunctional monomer capable of thermal polymerization or photo polymerization and a polymer electrolyte onto a first polymer electrolyte membrane in an island form;
photo-irradiating and/or heating the applied solution to form polymer electrolyte particles having a high modulus of elasticity on said first polymer electrolyte membrane;
applying a polymer electrolyte solution onto the face of said first polymer electrolyte membrane having said particles;
drying said applied polymer electrolyte solution to form a composite polymer electrolyte membrane having a second polymer electrolyte membrane that contains said particles; and
joining one of the electrodes to one face of said composite polymer electrolyte membrane and joining the other electrode to the other face.

**F I G. 1A**

**F I G. 1B**

## F I G. 2 A

—23
—24
—21
—22
—26
—25

## F I G. 2 B

—23
—24
—21
—22
—26
—25

## F I G. 3 A

—33
—34
—31
—32
—36
—35

## F I G. 3 B

—33
—34
—31
—32
—36
—35

F I G. 4

(a)

(b)

# F I G. 5

(a)

57a
59

(b)

58
57a
59

(c)

52
58
57a
59

(d)

52
57b
57a
} 51
59

(e)

53 54 52
51
55 56

F I G.  6

(a)

67a

69a

(b)

62

67a

69a

(c)

68

69b

67b

67a

62

69a

(d)

62

69b

67b

61

67a

69a

(e)

63  64  62

61

65  66

F I G. 7

(a)

77a
79

(b)

78

77a
79

Ultraviolet rays

(c)

72

77a
79

(d)

72    70

77a
79

(e)

72

77b
77a  } 71
79

(f)

72    73    74

71

75    76    72

FIG. 8

FIG. 9

201

202

203

FIG. 10

216  214  212

211

217  218  215  213

FIG. 11

221

222

225
223
224

F I G. 1 2 A

F I G. 1 2 B

21

F I G. 1 3

## INTERNATIONAL SEARCH REPORT

International application No.

PCT/JP03/03479

**A. CLASSIFICATION OF SUBJECT MATTER**
Int.Cl⁷ H01M8/02, H01M8/10

According to International Patent Classification (IPC) or to both national classification and IPC

**B. FIELDS SEARCHED**

Minimum documentation searched (classification system followed by classification symbols)
Int.Cl⁷ H01M8/02, H01M8/10

Documentation searched other than minimum documentation to the extent that such documents are included in the fields searched
Jitsuyo Shinan Koho          1922–1996   Toroku Jitsuyo Shinan Koho   1994–2003
Kokai Jitsuyo Shinan Koho    1971–2003   Jitsuyo Shinan Toroku Koho   1996–2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-294260 A (Sony Corp.), 20 October, 2000 (20.10.00), (Family: none) | 1-9 |
| A | WO 95/32236 A (DAIS CORP.), 30 November, 1995 (30.11.95), & JP 10-503788 A | 1-9 |
| P,A | JP 2003-59511 A (Matsushita Electric Industrial Co., Ltd.), 28 February, 2003 (28.02.03), (Family: none) | 1-9 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 June, 2003 (25.06.03) | 08 July, 2003 (08.07.03) |

| Name and mailing address of the ISA/ | Authorized officer |
|---|---|
| Japanese Patent Office | |
| Facsimile No. | Telephone No. |

Form PCT/ISA/210 (second sheet) (July 1998)